# EUROPÄISCHE PATENTANMELDUNG

(11) **EP 0 905 961 A2**
(43) Veröffentlichungstag der Anmeldung: **31.03.1999**
(21) Anmeldenummer: 98440185.1
(22) Anmeldetag: 28.08.1998
(51) Int. Cl.: H04M 15/00, H04Q 3/00

(54) **Verfahren zur Vergebührung der Nutzung eines Internet-Dienstes sowie Dienststeuereinheit und Diensterbringungseinrichtung**

(30) Priorität: 29.09.1997 DE 19742858
(71) Anmelder: ALCATEL, 75088 Paris (FR)
(72) Erfinder: Stahl, Uwe, 71229 Leonberg (DE); Lautenschlager, Wolfgang, 71287 Weissach-Flacht (DE); Orlamünder, Harald, 71254 Ditzingen (DE); Siegmund, Gerd, 70435 Stuttgart (DE)
(74) Vertreter: Zinsinger, Norbert

(57) **Zusammenfassung**

Die Erfindung betriffte ein Verfahren zur Vergebührung der Nutzung eines Internet Dienstes (SERV) durch einen Teilnehmer eines Kommunikationsnetzes (KN) sowie eine Diensteinheit (SERV_IN) dieses Kommunikationsnetzes und eine Diensterbringungseinrichtung(SERVU), die den Internet Dienst (SERV) erbringt. Der Teilnehmer greift auf den Internet Dienst (SERV) mittels eines Endgerätes (TE) des Kommunikationsnetzes zu. Beim Aufbau einer Kommunikationsverbindung zwischen dem Endgerät (TE) und dem Internet (INT) wird die Diensteinheit (SERV_IN) des Kommunikationsnetzes (KN) getriggert. Wenn über diese Kommunikationsverbindung auf den Internet Dienst (SERV) zugegriffen wird, wird zusätzlich eine Steuerverbindung (KOMM) zwischen dem Internet Dienst (SERV) und der Diensteinheit (SERV_IN) aufgebaut. Gebührendaten, die Gebühren für die Nutzung des Internet Dienst durch den Teilnehmer bezeichnen, werden über die Steuerverbindung (KOMM) an die Diensteinheit (SERV_IN) des Kommunikationsnetzes übertragen und die Diensteinheit (SRV_IN) des Kommunikationsnetzes steuert sodann die Vergebührung der Gebühren im Kommunikationsnetz (KN).

## Beschreibung

Die Erfindung betrifft ein Verfahren zur Vergebührung der Nutzung eines Internet-Dienstes durch einen Teilnehmer eines Kommunikationsnetzes nach dem Oberbegriff von Anspruch 1, eine Dienststeuereinheit nach dem Oberbegriff von Anspruch 8 und eine Diensterbringungseinrichtung zum Erbringen eines kostenpflichtigen Internet-Dienstes nach dem Oberbegriff von Anspruch 9.

Im Internet werden eine Vielzahl von kostenpflichtigen Diensten, beispielsweise Informationsdienste oder interaktive Dienste, bereitgestellt. Auf diese Dienste kann von einem Teilnehmer eines öffentlichen Fernsprechnetzes mittels eines geeigneten Endgerätes zugegriffen werden, indem er eine Verbindung über das Fernsprechnetz zu einem Internet Gateways aufbaut, was ihm den Netzzugang zum Internet ermöglicht.

Ein übliches Verfahren zur Vergebührung der Inanspruchnahme solcher Internet Dienste besteht darin, daß der Benutzer eines solchen Dienstes aufgefordert wird seine Kreditkartennummer an den Internet Dienst zu senden. Die Vergebührung des kostenpflichtigen Dienstes erfolgt sodann über das Kreditkarteninstitut.

Der Nachteil dieses Verfahrens besteht darin, daß vertrauliche Daten, nämlich die Kreditkartennummer, über ein offenes Kommunikationsnetz, nämlich das Internet, gesendet werden. Dies birgt große Sicherheitsrisiken in sich.

Die Erfindung geht nun von einem weiterentwickelten Verfahren aus, wie es in EP 0765068 A2 beschrieben wird.

Um den Zugang zu einem kostenpflichtigen Internet Dienst zu erhalten, wählt der Teilnehmer zuerst eine bestimmte Telefonnummer des Fernsprechnetzes. Auf die Wahl dieser Nummer wird eine Verbindung zu einem Ansagedienst des Fernsprechnetzes aufgebaut, der ihm per Sprachansage eine Codenummer mitteilt. Diese Codenummer muß der Teilnehmer anschließend dem Internet- Dienst angeben, um Zugang zu diesem Dienst zu erhalten. Die Vergebührung des Internet Dienstes erfolgt hierbei dadurch, daß dem Teilnehmer für die Anwahl des Ansagedienstes Gebühren in Rechnung gestellt werden, die als Gebühren für den Zugang zu dem Internet Dienst verwendet werden.

Der Erfindung liegt nun die Aufgabe zugrunde, die Vergebührung eines Internet Dienstes zu unterstützen, der von dem Teilnehmer eines Kommunikationsnetzes, insbesondere eines Fernsprechnetzes, in Anspruch genommen wird.

Diese Aufgabe wird gelöst durch ein Verfahren zur Vergebührung der Nutzung eines Internet-Dienstes durch einen Teilnehmer eines Kommunikationsnetzes nach der Lehre von Anspruch 1, durch eine Diensteinheit nach der Lehre von Anspruch 8 und durch eine Diensterbringungseinrichtung zum Erbringen eines kostenpflichtigen Internet-Dienstes nach der Lehre von Anspruch 9.

Der Erfindung liegt hierbei der Gedanke zugrunde, beim Zugang zum Internet einen Dienst des Kommunikationsnetzes zu triggern. Dieser Dienst kommuniziert im Folgenden mit den gebührenpflichtigen Internet Diensten, auf die der Teilnehmer zugreift, und stellt Gebührendaten für die Benutzung dieser Dienstes im Kommunikationsnetz zur Verfügung, beispielsweise um dort den Teilnehmer zu Informieren oder die Vergebührung der Nutzung dieser Internet Dienste zu steuern.

Ein Vorteil der Erfindung besteht darin, daß hierdurch ein hoher Sicherheitsstandard gewährleistet werden kann. Es müssen keine sicherheitsrelevanten Daten zwischen dem Teilnehmer und dem Internet Dienst ausgetauscht werden.

Ein weiterer Vorteil der Erfindung besteht darin, daß sie sehr benutzerfreundlich ist. Die Vergebührung der Benutzung eines Internet Dienstes kann automatisch erfolgt, ohne daß die Eingabe spezieller Codenummern notwendig ist. Die Abrechnung der Gebühren kann wirtschaftlich über den Netzbetreiber des Kommunikationsnetzes erfolgen, also über die Telefonrechnung.

Vorteilhafte Ausgestaltungen der Erfindung sind den Unteransprüchen zu entnehmen.

Eine kostengünstige Implementierungsform der Erfindung besteht darin, die Diensteinheit des Kommunikationsnetzes mittels einer IN-Architektur (IN = Intelligent Network) bereitzustellen sowie die Verbindung zwischen dem Internet Dienst und der Diensteinheit des Kommunikationsnetzes über das Internet aufzubauen.

Im Folgenden wird die Erfindung anhand eines Ausführungsbeispiels unter Zuhilfenahme beiliegender Zeichnungen beispielhaft erläutert.
- Fig. 1: zeigt ein Blockschaltbild einer Kommunikationsumgebung mit einer erfindungsgemäßen Dienststeuereinheit und einer erfindungsgemäßen Diensterbringungseinrichtung.
- Fig. 2: zeigt ein Ablaufdiagramm für die Durchführung des erfindungsgemäßen Verfahrens in der Kommunikationsumgebung von Fig. 1.
- Fig. 3: zeigt ein detaillierteres Ablaufdiagramm für die Durchführung des erfindungsgemäßen Verfahrens in der Kommunikationsumgebung von Fig. 1.

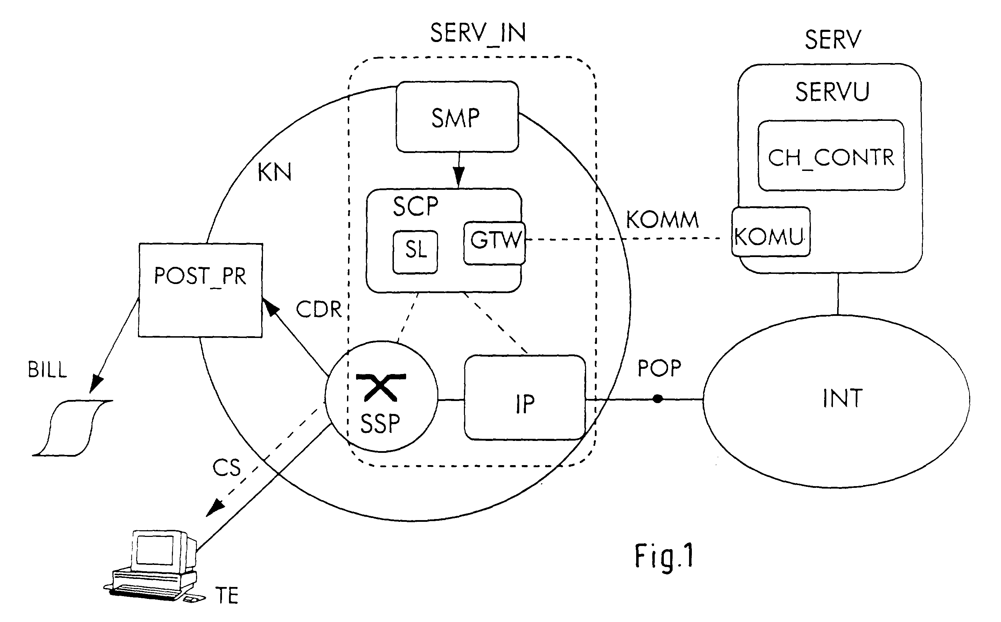

Fig. 1 zeigt zwei Kommunikationsnetz KN und INT, ein Endgerät TE und einen Dienst SERV.

Bei dem Kommunikationsnetz KN handelt es sich um ein öffentliches ISDN Fernsprechnetz (ISDN = Integrated Services Digital Network).

Es ist auch möglich, daß das Kommunikationsnetz KN von mehreren öffentlichen oder privaten Telekommunikationsnetzen unterschiedlicher Netzbetreiber gebildet wird. Es kann sich bei dem Kommunikationsnetz KN weiter auch um ein analoges Fernsprechnetz handeln.

Das Kommunikationsnetz KN weist ein oder mehrere miteinander verbundene Vermittlungsstellen, eine Diensteinheit SERV_IN und eine Vergebührungseinrichtung POST_PR auf.

Die Vergebührungseinrichtung POST_PR stellt einen Vergebührenrechner des Kommunikationsnetzes KN dar, mittels dem die innerhalb einer Zeitperiode für einen Teilnehmer des Kommunikationsnetzes KN angefallenen Gebühren bestimmt werden. Die Vergebührungseinrichtung POST_PR empfängt von Vermittlungsstellen des Kommunikationsnetzes KN einen Verbindungsdatensatz CDR und erstellt je Teilnehmer eine Gebührenrechnung BILL, die dem Teilnehmer dann zugesendet wird.

Die Diensteinheit SERV_IN ist mittels einer IN-Architektur realisiert. Es ist jedoch auch möglich, daß die Funktionen der Diensteinheit SERV_IN durch SW Programme bereitgestellt werden, die in die Steuerung einer Vermittlungsstelle des Kommunikationsnetzes KN integriert sind. Eine weitere Möglichkeit der Realisierung der Diensteinheit SERV_IN besteht darin, daß die Steuerfunktionen des Dienstes SERV durch einen Server erbracht werden, der mit der Steuerung einer Vermittlungsstelle des Kommunikationsneztes KN über ein Daten netz verbunden ist.

Die Diensteinheit SERV_IN weist eine Dienstvermittlungsstelle SSP, ein Dienstunterstützungseinrichtung IP, eine Dienststeuereinheit SCP und ein Dienstmanagementsystem SMP auf.

Die Komponenten der Diensteinheit SERV_IN kommunizieren gemäß der IN-Architektur miteinander und sind gemäß den üblichen IN Spezifikationen aufgebaut.

Die Dienstunterstützungseinrichtung IP stellt ein Internet Gateway zur Verfügung.

Die Dienststeuereinheit SCP weist eine Dienstelogik SL und zusätzlich zu der sonst üblichen Ausgestaltung einer IN Dienststeuereinheit eine Kommunikationseinheit GTW auf. Die Kommunikationseinheit GTW stellt einen Netzzugang zu dem Daten netz INT bereit und weist die notwendigen Protokolldateneinheiten auf, um über das Daten netz INT zu kommunizieren. Die Kommunikation über das Daten netz INT kann hierbei auch mittelbar über das Kommunikationsnetz KN und ein Gateway zum Daten netz INT durchgeführt werden.

Die Dienstelogik SL besteht aus den Steuerprogrammen der Dienststeuereinheit SCP, die den hier beschriebenen Vergebührungsdienst für Internet Dienste steuern. Es ist natürlich auch möglich, das auf der Dienststeuereinheit SCP noch weitere Dienstelogika weiterer von der Dienststeuereinheit SCP angebotener Dienste installiert sind.

Die Dienstelogik SL wird durch einen an sie adressierten IN Ruf getriggert. Sie steuert sodann den Verbindungsaufbau zwischen dem rufenden Endgerät und einem Internet Gateway und ist im folgenden bezüglich dieser Kommunikationsverbindung in einem Wartezustand. Wird ihr im folgenden über die Kommunikationseinheit GTW signalisiert, daß ein Teilnehmer über diese von ihr aufgebaute Kommunikationsverbindung einen kostenpflichtigen Internet Dienst in Anspruch nimmt oder nehmen will, so empfängt sie die entsprechenden Gebührendaten über die Kommunikationseinheit GTW und steuert die Vergebührung dieser Gebühren im Kommunikationsnetz KN.

Das Kommunikationsnetz INT stellt ein allgemein zugängliches, global verfügbares, auf dem Übertragungsprotokoll TCP/IP basierendes Daten netz dar, das als Internet bezeichnet wird. Das Datennetz INT ist mit dem Kommunikationsnetz KN über einen Netzübergang POP und mit einer Diensterbringungseinrichtung SERVU verbunden, die den Dienst SERV bereitstellt.

Die Diensterbringungseinrichtung SERVU weist ein Rechnersystem mit peripheren Komponenten auf, die eine Kommunikation mit dem Daten netz INT ermöglichen. Auf diesem Rechnersystem setzt eine Softwareplattform und Applikations-Programme auf, die die Erbringung des Dienstes SERV steuern. Bei dem Dienst SERV handelt es sich um einen Informationsdienst, der auf Anforderung kostenpflichtige Informationen wie Wetterberichte, Börsenkurse, Bilder, Filme oder SW-Programme zur Verfügung stellt. Es ist auch möglich, daß der Dienst SERV andere oder weitere Dienstleistungen wie Buchungen, Bestellungen usw. erbringt.

Die Diensterbringungseinrichtung SERVU weist darüberhinaus eine Vergebührungseinheit CH_CONTR und eine Kommunikationseinheit KOMU auf.

Die Kommunikationseinheit KOMU enthält Steuerroutinen und Protokollstacks, die eine Kommunikation mit der Diensteinheit SERV IN ermöglichen.

Die Vergebührungseinheit CH_CONTR weist diejenigen Steuerroutinen der Diensteinrichtung SERVU auf, die die Vergebührung des Dienstes SERV steuern. Greift ein Teilnehmer des Kommunikationsnetzes KN auf den Dienst SERV zu, so steuert die Vergebührungseinheit CH_CONTR den Aufbau einer Verbindung zur Diensteinheit SERV_IN. Über diese Verbindung übermittelt sie sodann Gebührendaten, die die Gebühren für die Benutzung des Dienstes durch den Teilnehmer beschreiben. Die Vergebührung dieser Gebühren wird sodann von der Diensteinheit SERV_IN im Kommunikationsnetz KN durchgeführt.

Das Endgerät TE ist ein Computer, der über eine ISDN Schnittstelle mit dem Kommunikationsnetz KN verbunden ist. Über diese Schnittstelle ist es ihm möglich, einen oder mehrere Nutzkanäle durch das Kommunikationsnetz KN aufzubauen und Daten über diese Kanäle auszutauschen. Es ist hierbei auch möglich, daß der Computer über eine analoge Schnittstelle mit dem Kommunikationsnetz KN verbunden ist und die Datenkommunikation mittels eines Modems erfolgt.

Der Computer verfügt des weiteren über entsprechenden Applikationsprogramme (Internet Browser), die eine Interaktion über das Daten netz INT ermöglichen.

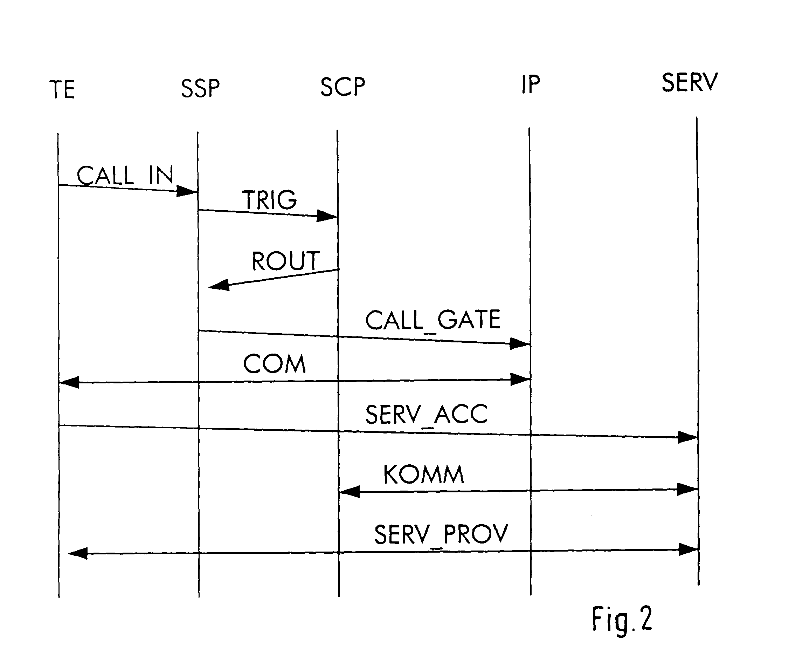

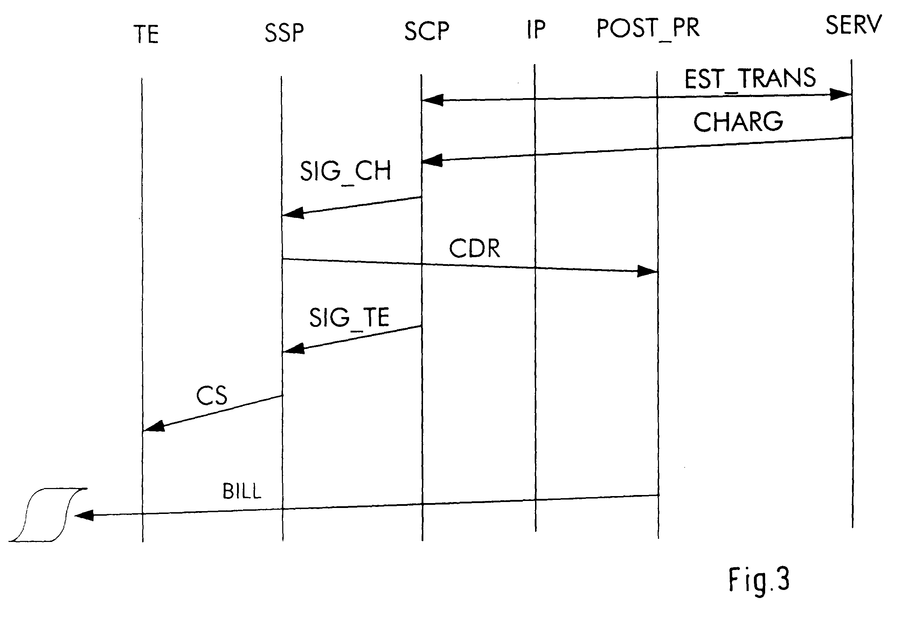

Im folgenden wird das erfindungsgemäße Verfahren und die detaillierte Funktion der Dienstelogik SL und der Vergebührungseinheit CH_CONTR anhand der Ablaufdiagramme von Fig. 2 und Fig. 3 erläutert.

Fig. 2 zeigt den Austausch von Nachrichten und den Aufbau von Kommunikationsverbindungen zwischen dem Endgerät TE, der Dienstvermittlungsstelle SSP, der Dienststeuereinheit SCP, der Dienstunterstützungseinrichtung IP und dem Dienst SERV.

Um Zugang in das Datennetz INT zu erhalten, sendet das Endgerät TE eine Verbindungsanforderung CALL_IN an das Kommunikationsnetz KN. Die Verbindungsanforderung CALL_IN enthält als gerufenen Rufnummer eine IN Rufnummer, die dem von der Dienstelogik SL gesteuerten Dienst zugeordnet ist.

Die Verbindungsanforderung CALL_IN wird durch das Kommunikationsnetz KN zur Dienstvermittlungsstelle SSP geleitet, die die gerufene Rufnummer als der Dienstelogik SL zugeordnet erkennt und eine entsprechende Signalisierungsnachricht TRIG an die Dienststeuereinheit SCP über das #7 Signalisierungsnetz sendet, die die Dienstelogik SL triggert und damit aktiviert. Die Dienstelogik SL bestimmt ein verfügbares Gateway zu dem Daten netz INT. Ein solches Gateway wird beispielsweise von der Dienstunterstützungseinrichtung IP bereitgestellt. Es können auch mehrere solcher Dienstunterstützungseinrichtung IP zur Auswahl zur Verfügung stehen, wodurch eine höhere Übertragungskapazität ins Daten netz INT bereitsteht. Die Verwendung eines derartigen Gateways hat den Vorteil, daß die Dienststeuereinheit direkt über #7 Zustandsdaten des Gateway abfragen und Steuerinformationen an das Gateway senden kann, so daß sich beispielsweise der Auswahlprozess vereinfacht.

Es ist natürlich auch möglich, daß ein Gateway ausgewählt wird oder nur ein Gateway zur Verfügung steht, das nicht Teil der Diensteinheit SERV IN und nicht Teil einer Dienstunterstützungseinrichtung ist.

Die Dienstelogik SL veranlaßt sodann das Signalisieren einer Nachricht ROUT an die Dienstvermittlungsstelle SSP. Die Nachricht ROUT enthält die Adresse des ausgewählten Gateways, hier die der Dienstunterstützungseinrichtung IP, und veranlaßt die Dienstvermittlungsstelle SSP, die wartende Verbindungsanforderung mit dieser neuen Adresse als Zielrufnummer weiterzuleiten. Die so veränderte Verbindungsanforderung CALL_GATE wird zur Dienstunterstützungseinrichtung IP geleite und sodann eine Nutzverbindung COM zwischen dem Endgerät TE und der Dienstunterstützungseinrichtung IP aufgebaut. Nun kann das Endgerät TE mit Endgeräten des Datennetzes INT kommunizieren.

Das Endgerät TE führt nun einen Zugriff SERV_ACC auf den Dienst SERV durch. Bevor die Vergebührungseinheit CH_CONTR nun den Zugriff auf die Nutzung des Dienstes SERV freigibt, wird eine Authentisierungsprozedur zwischen dem Endgerät TE und dem Dienst SERV durchgeführt, in der sich der Teilnehmer gegenüber dem Dienst SERV ausweist. Um die Sicherheit noch weiter zu erhöhen, ist es auch möglich, daß eine Verschlüsselung oder eine weitere Authentisierung zwischen der Dienstunterstützungseinrichtung IP und der Vergebührungseinheit CH_CONTR durchgeführt wird. Es kann auch nur eine Authentisierung der Dienstunterstützungseinrichtung IP gegenüber dem Dienst SERV erfolgen. Es ist weiter möglich, auf die Autentisierung zu verzichten, was aber aus Sicherheitsgesichtspunkten nicht zu empfehlen ist.

Nachdem der Vergebührungseinheit CH_CONTR der Teilnehmer bzw. die als Zugangsgateway fungierende Dienstunterstützungseinrichtung IP bekannt ist, wird eine Steuerverbindung KOMM zwischen den Komunikationseinheiten GTW und KOMU aufgebaut. Der Verbindungsaufbau wird von der Vergebührungseinheit CH_CONTR veranlaßt, die über die Authentifizierung ermittelt hat, daß der zugreifende Teilnehmer dem Kommunikationsnetz KN bzw. dem durch die Dienstunterstützungseinrichtung IP bereitgestellten Gateway zugeordnet ist.

Es ist aber auch möglich, daß die Dienstelogik SL den Verbindungsaufbau veranlaßt. Bei einer Authentifizierung durch die Dienstunterstützungseinrichtung IP oder durch Überwachen der Authentifizierung des Teilnehmers kann die Dienstunterstützungseinrichtung IP die Adresse des Dienstes SERV bestimmen und diese an die Dienstelogik SL zurückmelden.

Die Steuerverbindung KOMM wird vorteilhafterweise über das Daten netz INT aufgebaut. Es ist jedoch auch möglich, daß diese Verbindung über ein anderes Kommunikationsnetze oder über eine spezielle Verbindungsleitung aufgebaut wird.

Über die Steuerverbindung KOMM werden sodann die Gebührendaten an die Dienstelogik SL gesendet und von der Dienstelogik SL die Vergebührung der Gebühren im Kommunikationsnetz KN gesteuert. Dies wird im Folgenden detailliert anhand von Fig. 3 erläutert. Die Vergebührungseinheit CH_CONTR gibt sodann den Dienst SERV frei und der Dienst SERV wird in einer Interaktion SERV_PROV zwischen der Diensterbringungseinheit SERVU und dem Endgerät TE dem Teilnehmer bereitgestellt. Die Freigabe des Dienstes SERV kann hierbei sowohl vor, während, als auch nach Übertragung der Gebührendaten erfolgen.

Fig. 3 zeigt einen detaillierteren Austausch von Nachrichten zwischen dem Endgerät TE, Der Dienstvermittlungsstelle SSP, der Dienststeuereinheit SCP, der Dienstunterstützungseinrichtung IP, der Vergebührungseinrichtung POST_PR und dem Dienst SERV.

Zur Vergebührung des Dienstes SERV werden über die Verbindung KOMM Nachrichten EST_TRANS im Rahmen eines elektronischen Transaktionsverfahrens zwischen der Dienstelogik SL und der Vergebührungseinheit CH_CONTR ausgetauscht. Mittels dieses Transaktionsverfahrens wird die Benutzung des Dienstes SERV durch den Teilnehmer von der Dienstelogik (SL) autorisiert sowie der Anspruch auf die Bezahlung der Nutzungsgebühr für die Nutzung des Dienstes SERV durch den Teilnehmer von dem Betreiber des Dienstes SERV auf den Betreiber des Kommunikationsnetzes KN übertragen.

Es ist auch möglich, daß der Anspruch auf die Bezahlung auf den Betreiber des von der Dienstelogik SL bereitgestellten Dienstes übertragen wird, wenn dieser sich von dem Netzbetreiber des Kommunikationsnetzes KN unterscheidet. Die Dienstelogik SL würde sodann diesen Anspruch durch eine weitere Transaktion mit der Vergebührungseinrichtung POST_PR weiter auf den Netzbetreiber des Kommunikationsnetzes KN übertragen oder selbst die Gebühren einziehen.

Auf ein solches Transaktionsverfahren könnte auch verzichtet werden. Dies wäre jedoch aus Sicherheitsgesichtspunkten nachteilig.

Sodann werden Gebührendaten CHARG, die die Gebühren für die Nutzung des Dienstes SERV durch den Teilnehmer beschreiben, von der Vergebührungseinheit CH_CONTR an die Dienstelogik SL gesendet. Das Senden der Gebührendaten CHARG kann vor der Erbringung des Dienstes erfolgen, beispielsweise zur Information des Teilnehmers oder bei festen Gebühren für den Dienstzugang. Es kann auch während der Diensterbringung erfolgen, beispielsweise bei einer zeitabhängigen Vergebührung. Weiter kann es auch erst nach der Diensterbringung erfolgen, wenn die Summe der angefallenen Gebühren feststeht.

Die Dienstelogik signalisiert diese Gebühren an die Dienstvermittlungsstelle SSP durch Senden einer Signalisierungsnachricht SIG_CH, die die Dienstvermittlungsstelle SSP veranlaßt, diese Gebühren zusätzlich zu den Übertragungsgebühren für die Kommuniktaionsverbindung COM im Gebührendatensatz CDR (call data record) des Teilnehmers einzutragen. Dieser Gebührendatensatz CDR wird sodann von der Dienstvermittlungsstelle SSP oder von einer anderen Vermittlungsstelle des Kommunikationsnetzes KN an die Vergebührungseinrichtung POST_PR gesendet.

Es ist auch möglich, daß die Gebühren direkt von der Dienstelogik SL an die Vergebührungseinrichtung POST_PR gesendet werden.

Die Übertragung des Gebührendatensatz CDR an die Vergebührungseinrichtung POST_PR kann hierbei sowohl On-Line als auch Off-Line erfolgen. Die Vergebührungseinrichtung POST_PR erstellt innerhalb gewisser Zeitabstände sodann die Rechnung BILL und sendet sie an den Teilnehmer.

Es besteht weiter die Möglichkeit, daß die Dienstelogik SL den Teilnehmer zusätzlich oder ausschließlich über die anfallenden Gebühren oder die ihm belasteten Gebühren benachrichtigt.

Hierzu sendet die Dienstelogik SL eine Signalisierungsnachricht SIG_TE mit solchen Gebührendaten CS an die Dienstvermittlungsstelle SSP. Diese übermittelt die Daten CS über den ISDN Signalisierungskanal an das Endgerät TE, das die Gebührendaten CS sodann dem Teilnehmer auf dem Bildschirm anzeigt.

## Patentansprüche

1. Verfahren zur Vergebührung der Nutzung eines Internet Dienstes (SERV) durch einen Teilnehmer eines Kommunikationsnetzes (KN), der auf den Internet Dienst (SERV) mittels eines Endgerätes (TE) des Kommunikationsnetzes zugreift,
**dadurch gekennzeichnet,** daß beim Aufbau einer Kommunikationsverbindung (COM) zwischen dem Endgerät (TE) und dem Internet (INT) eine Diensteinheit (SERV_IN) des Kommunikationsnetzes (KN) getriggert wird, daß, wenn über diese Kommunikationsverbindung (COM) auf den Internet Dienst (SERV) zugegriffen wird, zusätzlich eine Steuerverbindung (KOMM) zwischen dem Internet Dienst (SERV) und der Diensteinheit (SERV_IN) des Kommunikationsnetzes aufgebaut wird, daß Gebührendaten (CHARG), die Gebühren für die Nutzung des Internet Dienst durch den Teilnehmer bezeichnen, über die Steuerverbindung (KOMM) an die Diensteinheit (SERV_IN) des Kommunikationsnetzes übertragen werden und daß die Diensteinheit (SRV_IN) des Kommunikationsnetzes die Vergebührung der Gebühren im Kommunikationsnetz (KN) steuert.

2. Verfahren nach Anspruch 1, dadurch gekennzeichnet, daß zum Aufbau der Kommunikationsverbindung (COM) zwischen dem Endgerät (TE) und dem Internet (INT) eine Verbindungsanforderung (CALL_IN) mit einer IN Rufnummer von dem Endgerät (TE) gesendet wird und daß diese Verbindungsanforderung (CALL_IN) eine IN Dienststeuereinheit (SCP) der Diensteinheit triggert, die daraufhin den Aufbau der Kommunikationsverbindung zwischen dem Endgerät (TE) und einem Internet Gateway (IP) veranlaßt.

3. Verfahren nach Anspruch 2, dadurch gekennzeichnet, daß die Dienststeuereinheit (SERV_IN) den Aufbau der Kommunikationsverbindung (COM) zwischen dem Endgerät (TE) und einer Dienstunterstützungseinrichtung (IP) der Diensteinheit veranlaßt, wobei die Dienstunterstützungseinrichtung (IP) als Internet Gateway dient.

4. Verfahren nach Anspruch 1, dadurch gekennzeichnet, daß die Steuerverbindung (KOMM) zwischen dem Internet Dienst (SERV) und der Diensteinheit (SERV_IN) über das Internet (INT) aufgebaut wird.

5. Verfahren nach Anspruch 1, dadurch gekennzeichnet, daß mittels eines elektronischen Transaktionsverfahrens (EST_TRANS), das über die Steuerverbindung (KOMM) durchgeführt wird, der Anspruch auf die Bezahlung des Internet Dienstes (SERV) vom Betreiber des Internet-Dienstes (SERV) auf den Betreiber des Kommunikationsnetzes (KN) übertragen wird.

6. Verfahren nach Anspruch 1, dadurch gekennzeichnet, daß die Diensteinheit (SERV_IN) empfangene Gebührendaten (CHARG) über das Kommunikationsnetz (KN) an das Endgerät (TE) signalisiert.

7. Verfahren nach Anspruch 1, dadurch gekennzeichnet, daß die Diensteinheit (SERV_IN) die Gebühren für die Nutzung des Internet Dienstes in den Verbindungsdatensatz (CDR) des Teilnehmers einträgt.

8. Dienststeuereinheit (SCP), die der Vergebührung der Nutzung eines Internet-Dienstes (SERV) durch einen Teilnehmer eines Kommunikationsnetzes (KN) dient, der auf den Internet Dienst (SERV) über eine Kommunikationsverbindung (COM) des Kommunikationsnetzes zwischen dem Endgerät (TE) und dem Internet (INT) zugreift,
**dadurch gekennzeichnet,** daß die Dienststeuereinheit (SCP) mit einer Kommunikationseinheit (GTW) zum Aufbau einer Steuerverbindung (KOMM) zwischen dem Internet Dienst (SERV) und der Dienststeuereinheit (SCP) und mit einer Dienstelogik (SL) versehen ist, die so ausgestaltet ist, daß sie beim Aufbau der Kommunikationsverbindung (COM) zwischen dem Endgerät (TE) und dem Internet (INT) getriggert werden kann, daß sie Gebührendaten (CHARG), die Gebühren für die Nutzung des Internet Dienst (SERV) durch den Teilnehmer bezeichnen, über die Steuerverbindung (KOMM) empfängt und daß sie die Vergebührung der Gebühren im Kommunikationsnetz (KN) steuert.

9. Diensterbringungseinrichtung (SERVU) zum Erbringen eines kostenpflichtigen Internet-Dienstes (SERV) für einen Teilnehmer eines Kommunikationsnetzes (KN), der auf den Internet Dienst (SERV) mittels eines Endgerätes (TE) des Kommunikationsnetzes (KN) zugreift,
**dadurch gekennzeichnet,** daß die Diensterbringungseinheit (SERVU) mit einer Kommunikationseinheit (KOMU) zur Kommunikation mit einer Diensteinheit (SERV_IN) des Kommunikationsnetzes (KN) und mit einer Vergebührungseinheit (CH_CONTR) versehen ist, die so ausgestaltet ist, daß sie, wenn über eine Kommunikationsverbindung (COM) des Kommunikationsnetzes (KN) zwischen dem Endgerät (TE) und dem Internet (INT) auf den Internet Dienst (SERV) zugegriffen wird, zusätzlich eine Steuerverbindung (KOMM) zu der Diensteinheit (SERV_IN) des Kommunikationsnetzes (KN) aufbaut und daß sie das Senden von Gebührendaten (CHARG), die Gebühren für die Nutzung des Internet Dienstes (SERV) durch den zugreifenden Teilnehmer bezeichnen, über die Steuerverbindung (KOMM) an die Diensteinheit (SERV_IN) des Kommunikationsnetzes steuert.
